**Europäisches Patentamt**

**European Patent Office**

**Office européen des brevets**

(19)

(11) Veröffentlichungsnummer: **0 094 442**
**B1**

(12) # EUROPÄISCHE PATENTSCHRIFT

(45) Veröffentlichungstag der Patentschrift:
23.07.86

(51) Int. Cl.⁴: **A 01 B 73/00**

(21) Anmeldenummer: **82104287.6**

(22) Anmeldetag: **15.05.82**

(54) Bodenbearbeitungsmaschine für die Ankupplung an einen Schlepper.

(43) Veröffentlichungstag der Anmeldung:
**23.11.83 Patentblatt 83/47**

(45) Bekanntmachung des Hinweises auf die Patenterteilung:
**23.07.86 Patentblatt 86/30**

(84) Benannte Vertragsstaaten:
**DE FR GB IT NL**

(56) Entgegenhaltungen:
**DE-A-1 582 065**
**DE-A-2 351 065**
**DE-A-2 713 979**
**FR-A-2 002 653**
**FR-A-2 121 721**
**FR-A-2 446 586**

(73) Patentinhaber: **Rabewerk Heinrich Clausing, D-4515 Bad Essen 1 (DE)**

(72) Erfinder: **Warnking, Richard, Klockenpatt 5, D-4515 Bad Essen 1 (DE)**

(74) Vertreter: **Schlee, Richard, Dipl.- Ing., Patentanwälte Dipl.- Ing. R. Schlee Dipl.- Ing. A. Missling Bismarckstrasse 43, D-6300 Lahn-Giessen 1 (DE)**

EP 0 094 442 B1

### Beschreibung

Die Erfindung bezieht sich auf eine Bodenbearbeitungsmaschine für die Ankupplung an einen Schlepper, mit von einer Schlepper-Zapfwelle aus antreibbaren Werkzeugen, insbesondere Bodenfräse oder Kreiselegge, eventuell mit einem angebauten Zusatzgerät, und mit einer Langfahreinrichtung für den Transport der Maschine, mit der die Maschine in einer gegenüber der Arbeitsstellung um 90° verdrehten Lage an den Schlepper anhängbar ist und die, bezogen auf die Transportstellung, an einem Ende, nämlich dem Deichselende der Machine, eine Deichsel sowie im Bereich des anderen Endes, nämlich dem Radende der Maschine, ein nur für Transportzwecke vorgesehenes lösbares Radpaar aufweist.

Bodenbearbeitungsmaschinen haben in der Arbeitsstellung häufig eine Breite, die größer ist als die nach der Straßenverkehrszulassungsordnung höchstzulässige Breite, so daß ein Transport auf öffentlichen Straßen nicht mehr zulässig ist. Aber auch auf nichtöffentlichen Straßen ist die große Breite oft hinderlich, z. B. bei der Fahrt auf schmalen Feldwegen oder durch Toreinfahrten. Zur Lösung dieses Problems werden sogenannte Langfahreinrichtungen verwendet. Die Transportbreite ist dann nur etwa noch gleich der Ausdehnung der Maschine, die diese in der Arbeitsstellung in Fahrtrichtung aufweist.

Bekannt sind Bodenbearbeitungsmaschinen (DE-A-25 34 596, DE-A-26 38 417), die sich auch in der Arbeitsstellung auf einem eigenen Fahrwerk abstützen. Zum Übergang von der Arbeitsstellung in die Transportstellung werden die Räder des Fahrwerkes um 90° verdreht. Bei einer bekannten Maschine der eingangs genannten Art (DE-A-2 351 065) sind die Räder eines Radpaares, das ausschließlich Langfahrzwecken dient, vor dem hinteren Ende der Maschine seitlich des tragenden Gestells angeordnet. Die Räder sind an winkelförmigen Trägern gelagert, die das tragende Gestell übergreifen. Mit einer solchen Langfahreinrichtung ist es nicht möglich, Gerätekombinationen zu transportieren, die aus der Bodenbearbeitungsmaschine und einem daran angebauten Gerät, z. B. einer Drillmaschine, bestehen, da das eine Rad des Radpaares hinderlich wäre. Auch liegen die Räder des Radpaares so eng beieinander, daß im Falle eines Kombinationsgerätes ein seitliches Kippen zu befürchteh wäre.

Der Erfindung liegt die Aufgabe zugrunde, eine Bodenbearbeitungsmaschine der eingangs genannten Art so auszubilden, daß sie auch mit einem an sie angebauten Zusatzgerät in Langfahrstellung transportiert werden kann.

Diese Aufgabe wird nach der Erfindung dadurch gelöst, daß die Länge der Maschine samt eventuellem Zusatzgerät, wobei dieses eingezogen sein kann, in Arbeitsrichtung gemessen, gleich oder nur wenig kleiner ist als die höchstzulässige Transportbreite, daß das Radpaar hinter dem Radende der Maschine angeordnet ist, und daß eine Halterung für das Radpaar derart in eine Ruhestellung nach oben klappbar oder schiebbar ist, daß die Breite der Maschine in der Arbeitsstellung verringert wird.

Durch diese Anordnung wird vermieden, daß die Transporträder seitlich der Bodenbearbeitungsmaschine Platz einnehmen, so daß seitlich der Maschine (bzw. in der Arbeitsstellung betrachtet vor oder hinter der Bodenbearbeitungsmaschine) ein Zusatzgerät, z.B. eine Drillmaschine, angeordnet sein kann.

Dadurch, daß die Halterung für das Radpaar einklappbar ost, wird vermieden, daß in der Arbeitsstellung seitlich weit vorragende Teile vorhanden sind, die hinderlich sein könnten, z.B. dann, wenn mit der Maschine entlang eines Zaunes oder dergleichen gearbeitet werden soll.

Vorteilhafterweise sind die Räder des Radpaares gemäß Anspruch 2 von einer Halterung lösbar. Dies hat den Vorteil, daß beim Übergang in die Arbeitsstellung die Räder nicht angehoben werden müssen; diese bleiben am Boden liegen, bis die Arbeit beendet ist. Erst danach wird das Gerät wieder auf die Transporträder aufgesetzt. Dieses Aufsetzen ist mit den Mitteln der Ansprüche 3 bis 5 besonders leicht möglich. Die Erweiterung der Umfassungsgabeln gemäß Anspruch 4 gestattet ein sicheres Aufsetzen der Maschine auf die Achse des Radpaares auch ohne vorheriges genaues Ausrichten quer zur Achse. Die Führungsscheiben gemäß Anspruch 5 machen ein genaues seitliches Ausrichten vor dem Aufsetzen überflüssig. Die Räder des Radpaares müssen nicht fest miteinander verbunden sein, sondern können auch voneinander lösbar sein. So könnte jedes Rad einen eigenen Halter aufweisen. Unter dem Ausdruck "Radpaar" sind ganz allgemein zwei Räder zu verstehen, die bezüglich der Transportrichtung einen Querabstand voneinander haben.

Bei einer bevorzugten Ausführungsform der Erfindung, die im Anspruch 6 angegeben ist, sind die Räder des Radpaares relativ zum tragenden Gestell der Maschine asymmetrisch angeordnet. Diese Anordnung ist besonders günstig für den Transport eines Gesamtgerätes, das aus der Bodenbearbeitungsmaschine und einem daran angebauten Zusatzgerät besteht. Insbesondere ist hierbei gedacht an die Kombination einer Kreiselegge mit einer Drillmaschine.

Vorzugsweise ist die angebaute Maschine (Zusatzgerät) gemäß Anspruch 7 verschiebbar. Dadurch kann die Transportbreite verringert werden, so daß auch Kombinationsmaschinen transportiert werden können, deren Ausdehnung bei der Arbeitsstellung in Fahrtrichtung größer ist als die höchstzulässige Transportbreite.

Vorzugsweise ist auch die Deichsel hochklappbar (Anspruch 8 und 9) und liegt in der hochgeklappten Stellung über dem tragenden Teil der Maschine bzw. seitlich davon. Dadurch werden in der Arbeitsstellung seitlich vorragende Teile vermieden.

Insbesondere im Zusammenhang mit einer asymmetrischen Anordnung der Transporträder ist eine Deichselkonstruktion gemäß Anspruch 10 von Vorteil. Durch diese Konstruktion erreicht man, daß trotz seitlicher Versetzung des Anhängepunktes eine Ruhestellung der Deichsel erreicht wird, in der die Deichsel mit einem angebauten Gerät nicht kollidiert.

Die Deichsel kann gemäß Anspruch 11 in bekannter Weise ein höhenverstellbares Standbein aufweisen.

Die Verwendung gleicher Bauteile für die Deichsel und für die Halterung des Radpaares gemäß Anspruch 14 bringt Fertigungsvorteile mit sich.

In der Zeichnung sind Ausführungsbeispiele der Erfindung dargestellt. Die Bezeichnung der diversen Ansichten bezieht sich auf die durchweg dargestellte Transportstellung, in der die Maschine gegenüber der Arbeitsstellung um 90° verdreht ist. Es zeigen:

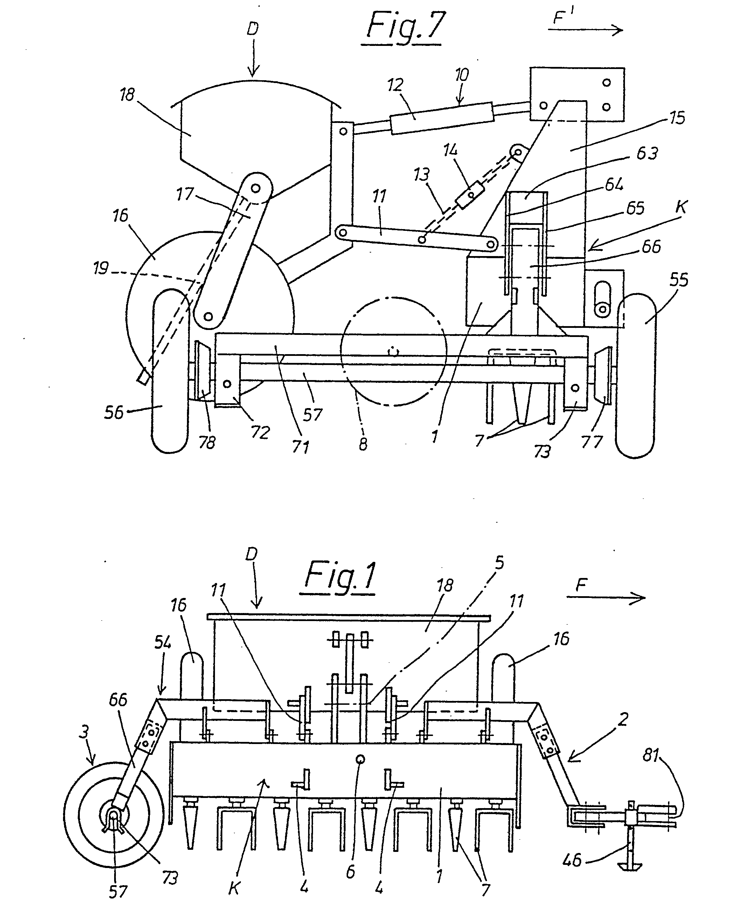

Fig. 1 eine Seitenansicht eines Kombinationsgerätes, bestehend aus einer Kreiselegge und einer daran angebauten Drillmaschine,

Fig. 2 eine teilweise Seitenansicht der Kreiselegge entsprechend der Linie II-II in Fig. 3 in dem Bereich, in dem sich die Deichsel befindet,

Fig. 3 einen Grundriß entsprechend dem Pfeil III in Fig. 2,

Fig. 4 eine alternative Ausführungsform für die Deichsel,

Fig. 5 eine teilweise Seitenansicht der Kreiselegge nach Linie V-V in Fig. 6 im Bereich des Transportrad-Paares,

Fig. 6 eine Draufsicht entsprechend dem Pfeil VI in Fig. 5 und

Fig. 7 eine Rückansicht entsprechend dem Pfeil VII in Fig. 5.

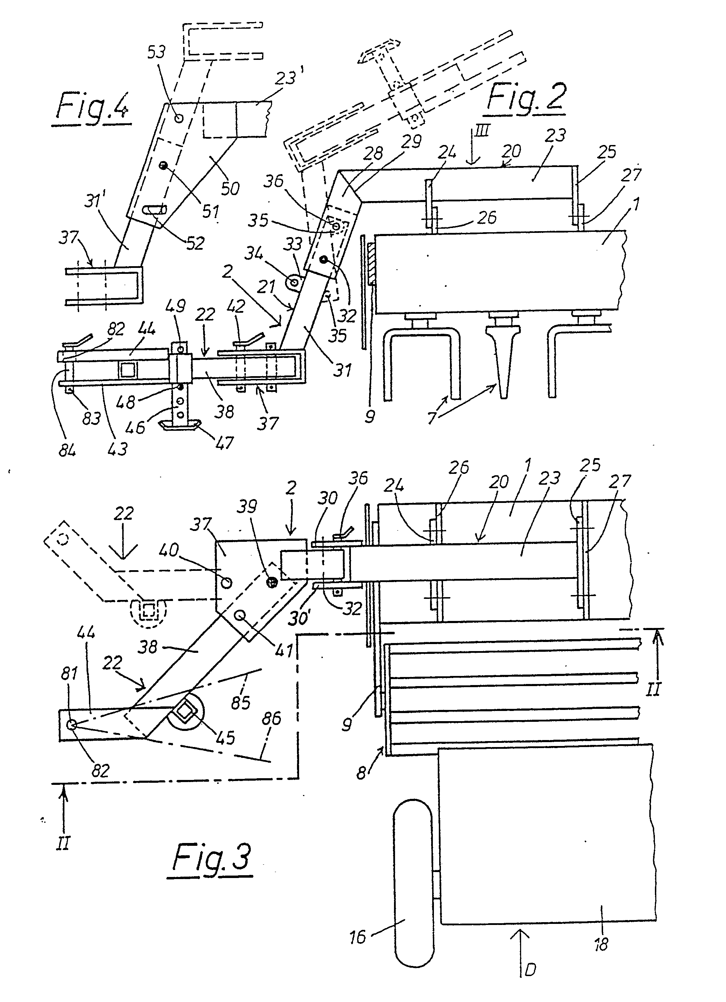

Das dargestellte Gerät ist ein Kombinationsgerät, bestehend aus einer mit K bezeichneten Kreiselegge und einer mit D bezeichneten Drillmaschine. Die Kreiselegge K hat ein tragendes Gestell 1 in Form eines Getriebekastens. Für Transportzwecke ist eine Langfahreinrichtung vorgesehen, die aus einer vorderen Deichsel 2 und einem hinteren Paar 3 aus Transporträdern besteht. Beim Transport wird das Gerät normalerweise in Richtung des Pfeiles F bewegt. In der Arbeitsstellung ist die Bewegungsrichtung rechtwinklig zur Zeichenebene, und zwar in Richtung auf den Betrachter. In der Arbeitsstellung ist das Gerät an das Dreipunktgestänge eines Schleppers angebaut. Die Unterlenker dieses Gestänges sind an Zapfen 4 angelenkt, die sich an der Vorderseite des Gestelles 1 befinden. Der obere Lenker des Dreipunktgestänges wird an der durch die strichpunktierte Linie 5 angedeutete Stelle befestigt. In der Arbeitsstellung ist an einen Anschluß 6 eine Gelenkwelle gekuppelt, die zur Zapfwelle des Schleppers führt. Von der Anschlußwelle 6 aus werden über Getriebe Kreisel 7 angetrieben, die den Boden bearbeiten. Wie die Rückansicht nach Fig. 7 zeigt, ist hinter dem Getriebekasten 1 eine Walze 8 angeordnet, die an Armen 9 (siehe z.B. auch Fig. 3) gelagert ist. Die Arme sind gegenüber dem Gestell 1 schwenkbar, wodurch die Höhenlage der Walze 8 gegenüber dem Gestell 1 verändert und so die Arbeitstiefe des Gerätes bestimmt werden kann.

Die Drillmaschine D ist mittels eines Dreipunktgestänges 10 mit der Kreiselegge K verbunden (siehe Fig. 7). Dieses Gestänge besteht aus zwei Unterlenkern 11 und einem als Spannschloß ausgebildeten und damit längenverstellbaren Oberlenker 12. Die Unterlenker 11 sind über eine Kette 13 mit eingebautem Spannschloß 14 an einem auf dem Gestell 1 der Kreiselegge befindlichen Turm 15 angehängt. Die Drillmaschine D hat eigene Laufräder 16, über die die Austrageinrichtung in bekannter Weise über ein Getriebe 17 angetrieben wird, so daß in einem Kasten befindliches Saatgut exakt proportional zur zurückgelegten Fahrstrecke in Särohre 19 eingebracht wird. Bei der Arbeit ist die Fahrtrichtung entsprechend dem Pfeil F' in Fig. 7.

Die Deichsel 2 (siehe Fig. 2 und 3) besteht aus einem fest am Gestell 1 angeordneten Oberteil 20, einem relativ dazu schwenkbaren Zwischenteil 21 und einem relativ zum Zwischenteil schwenkbaren Unterteil 22. Der feste Oberteil 20 hat ein horizontales Rohr 23 von quadratischem Querschnitt, an dem Befestigungsplatten 24 und 25 angeschweißt sind. Diese Befestigungsplatten sind mit Platten 26, 27 verschraubt, die ihrerseits mit dem Gestell 1 verschweißt sind. Mit dem horizontalen Rohr 23 ist ein kurzes Rohrstück 28 an einem Gehrungsstoß 29 verschweißt. Seitlich am kurzen Rohrstück 28 sind Platten 30, 30' angeschweißt, die eine Gabel bilden, zwischen die der Zwischenteil 21 der Deichsel eingreift. Dieser Zwischenteil hat ein Vierkantrohr 31, das mittels eines Bolzens 32 in der Gabel schwenkbar gelagert ist. An dem Vierkantrohr 31 befindet sich ein Lappen 33 mit einer Bohrung 34. Am oberen Ende des Vierkantrohres 31 befindet sich eine Arretierungsbohrung 35, durch die in der Arbeitsstellung ein Arretierungsbolzen 36 hindurchgesteckt ist, durch den im Verein mit dem Bolzen 32 eine starre Verbindung zwischen den Teilen 20 und 21 hergestellt wird.

Am unteren Ende des Vierkantrohres ist ein Bauteil 37 angeschweißt, das eine Lagergabel für den Eingriff des Unterteiles 22 bildet. Das Unterteil 22 hat wiederum ein Vierkantrohr 38, das im Bauteil 37 mittels eines Lagerbolzens 39 schwenbar gelagert ist. Im Bauteil 37 bafinden sich zwei Arretierungsbohrungen 40 und 41, auf die eine Querbohrung im Vierkantrohr 38 ausrichtbar ist. Dadurch kann der Unterteil 22 der Deichsel in den beiden Stellungen arretiert werden, die in Fig. 3 dargestellt sind. Die mit ausgezogenen Linien gezeichnete Stellung ist die Transportstellung, die mittels eines Arretierungsbolzens 42 fixierbar ist. Die gestrichelt gezeichnete Stellung wird hergestellt, bevor in die Ruhestellung der Deichsel übergegangen wird. Auch diese Stellung wird mittels des Arretierungsbolzens 42 festgehalten.

An das vordere Ende des Vierkantrohres 38 sind Platten angeschweißt, nämlich eine untere relativ dünne Platte 43 und eine relativ dicke obere Platte 44. Wie der Grundriß nach Fig. 3 zeigt, ist der Winkel zwischen den Platten 43 und 44 und dem Vierkantrohr 38 so, daß in der Arbeitsstellung der Deichsel (Transportstellung des Gerätes) die Platten 43, 44 parallel zur Fahrtrichtung sind.

Am Vierkantrohr 38 ist seitlich eine Hülse 45 angeschweißt, in der eine Stütze 46 verschiebbar ist. Die Stütze 46 ist unten mit einem tellerförmigen Fuß 47 ausgerüstet und kann innerhalb der Hülse 45 in der Höhe verstellt werden, zu welchem Zweck die Stütze 46 mehrere Querbohrungen enthält, durch die ein Arretierungsbolzen 48 hindurchsteckbar ist. Gegen Herabfallen wird die Stütze 46 durch einen weiteren Arretierungsbolzen 49 gesichert.

Bei der alternativen Ausführungsform der Deichsel gemäß Fig. 4 sind an das dem Vierkantrohr 23 analoge Vierkantrohr 23' zwei Platten 50 angeschweißt, zwischen die ein dem Vierkantrohr 31 analoges Vierkantrohr 31' eingreift. Dieses Vierkantrohr ist um einen Bolzen 51 schwenkbar und wird in der Transportstellung in der herabgeschwenkten Lage durch einen Arretierungsbolzen 52 fixiert. Zur Fixierung der hochgeschwenkten Stellung, die gestrichelt dargestellt ist, wird der Arretierungsbolzen 52 durch Löcher 53 in den Platten 50 hindurchgesteckt, wobei im Vierkantrohr 31' das gleiche Loch durchgriffen wird, das auch in der Arbeitsstellung durchgriffen wird. Am Vierkantrohr 31' befindet sich wieder ein Bauteil 37, in dem ein Unterteil der Deichsel (in Fig. 4 nicht dargestellt) in gleicher Weise gelagert ist, wie dies anhand der Fig. 2 und 3 besprochen wurde. Die Ausführungsform nach Fig. 4 unterscheidet sich im wesentlichen durch die andere Lage des Schwenkpunktes.

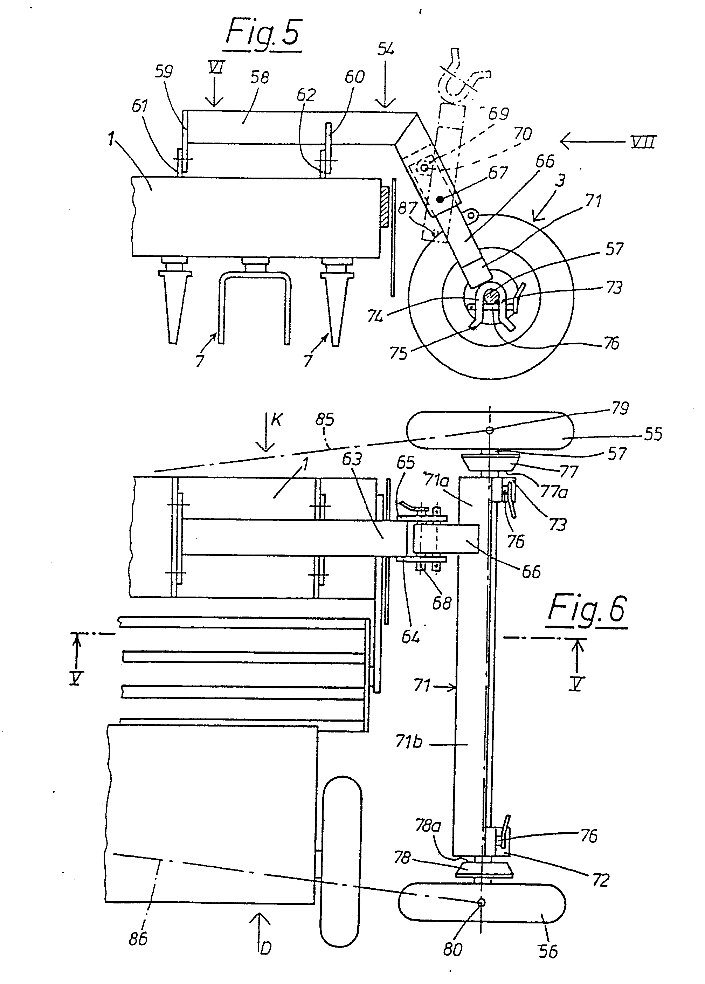

Die Aufhängung des Transporträderpaares wird nachfolgend anhand der Fig. 5 bis 7 genauer betrachtet. Zur Befestigung des Transporträderpaares 3 am Gestell 1 der Kreiselegge dient eine insgesamt mit 54 bezeichnete Halterung. Die Transporträder 55 und 56 sind an einer Achse 57 drehbar gelagert. Die Achse 57 ist von der Halterung 54 lösbar.

Die Halterung 54 hat ein oberes horizontales Vierkantrohr 58, mit dem Befestigungsplatten 59, 60 verschweißt sind. Die Befestigungsplatten 59, 60 sind mit Platten 61, 62 verschraubt, die ihrerseits mit dem Gestell 1 der Kreiselegge verschweißt sind. Das Vierkantrohr 58 ist also an dem anderen Ende der Kreiselegge in gleicher Weise befestigt, wie das Vierkantrohr 23 der Deichsel 2. Auch an das Vierkantrohr 58 ist seitlich ein kurzes Rohrstück 63 angeschweißt, an dem seitlich Platten 64, 65 anliegen, die eine Gabel bilden, zwischen die ein Vierkantrohr 66 eingreift. Die Teile 58 bis 65 der Halterung 54 sind also gleich ausgebildet wie der Deichsel-Oberteil 22 und der Deichsel-Zwischenteil 21, wobei allerdings an den unteren Enden der Vierkantrohre 31, 66 verschiedene Bauteile angeordnet sind. Das Vierkantrohr 66 ist um einen Bolzen 67 innerhalb der Gabel 64/65 schwenkbar. Die mit ausgezogenen Linien gezeichnete Transportstellung wird mittels eines Arretierungsbolzens 68 fixiert, der Bohrungen in den Platten 64, 65 und am Ende des Vierkantrohres 66 durchgreift. An diesem Vierkantrohr befindet sich auch ein Lappen 69 mit einer Bohrung 70, die in der Ruhestellung der Halterung 54 von dem Arretierungsbolzen 68 durchgriffen wird; hierbei ist die Bohrung 70 auf die Bohrungen in den Platten 64, 65 ausgerichtet, die auch zur Fixierung der Transportstellung dienen.

Mit dem in der Transportstellung unteren Ende des Vierkantrohres 66 ist ein weiteres Vierkantrohr 71 verschweißt, das rechtwinklig zu dem Rohr 66 verläuft. Wie der Grundriß nach Fig. 6 zeigt, ist das Vierkantrohr 71 asymmetrisch angeschweißt, nämlich derart, daß der Rohrteil 71a, der in Richtung der Frontseite der Kreiselegge K weist, wesentlich kürzer ist als der Rohrteil 71b, der in Richtung der Drillmaschine D weist. An den Enden des Vierkantrohres 71 befinden sich Gabeln 72 und 73, deren Form aus Fig. 5 ersichtlich ist. Jede der Gabeln 72, 73 ist nach unten offen. Die Gabelarme sind in ihren oberen Bereichen 74 parallel und divergieren im Bereich ihrer unteren Enden 75. Jede Gabel ist von einem Arretierungsbolzen 76 durchgriffen, der noch in dem Bereich 74 der Gabelarme angeordnet ist.

Auf der Achse 57 sind konische Scheiben 77, 78 angeordnet, die sich von außen nach innen verjüngen. Der Abstand der Innenflächen 77a, 78a der Scheiben 77, 78 ist nur wenig größer als die Länge des Vierkantrohres 71.

Die Abstützfläche des Gerätes ist durch ein Dreieck definiert, dessen Eckpunkte die Auflagepunkte 79, 80 der Transporträder 55, 56 und der Auflagepunkt 81 der Deichsel sind. Dieser Auflagepunkt stimmt im Wesentlichen überein mit Bohrungen 82, 83 in den Platten 44, 43 der Deichsel 2, durch die ein Zugbolzen 84 hindurchgesteckt ist. Eine Dreieckseite fällt in der Draufsicht gesehen mit der Achse 57 zusammen. Die anderen beiden Dreieckseiten sind durch strichpunktierte Linien 85 und 86 angedeutet. Die Abstützpunkte 79, 80, 81 sind so gewählt, daß der Gesamtschwerpunkt des Kombinationsgerätes genügend weit innerhalb der Stützfläche liegt, um ein Kippen mit genügender Sicherheit zu verhindern.

Gezeichnet ist durchweg die Transportstellung des Gerätes In der Transportstellung nimmt die Deichsel diejenige Lage ein, die in den Fig. 2 bis 4 mit ausgezogenen Linien dargestellt ist. Ebenfalls befindet sich das Transporträder-Paar 3 in der mit ausgezogenen Linien gezeichneten Stellung. Wie die Fig. 6 und 7 zeigen, liegt infolge der asymmetrischen Anordnung der Transporträder 55, 56 die Gerätekombination in der Rückansicht gesehen etwa zwischen den Transporträdern 55, 56. Jedenfalls ist die Anordnung so zu wählen, daß der Schwerpunkt der Kombination genügend weit innerhalb der Standfläche liegt, die weiter oben definiert wurde. Die Transportbreite, die in den Fig. 6 und 7 sichtbar ist, liegt innerhalb der höchstzulässigen Transportbreite. Falls das Gerät (in der Arbeitsstellung gesehen) eine Länge hat, die die höchstzulässige Transportbreite überschreitet, kann vor dem Übergang zum Transport das angebaute Gerät in Richtung des Vorgerätes verlagert werden, beispielsweise könnte zu diesem Zweck die Drillmaschine D nach oben geschwenkt werden, zu welchem Zweck im Breipunktgestänge 10 eine geeignete- Vorrichtung, z.B. eine Spindel, angeordnet sein könnte.

Beim übergang zur Arbeitsstellung wird die Gerätekombination auf den Boden abgestützt, wozu die Stütze 46 nach unten ausgefahren wird. Danach wird das Gerät vom Schlepper abgekuppelt. Der Schlepper wird nun vor das Gerät gefähren und dieses wird mittels des Schlepperdreipunktgestänges an den Schlepper angekuppelt, wobei die Unterlenker des Gestänges mit den Zapfen 4 verbunden werden und der Oberlenker bei 5 angekuppelt wird.

Nun werden die Arretierungsbolzen 76 aus den Gabeln 72, 73 herausgezogen. Danach wird die Gerätekombination mittels der Schlepperhydraulik etwas angehoben, wobei die Gabeln 72, 73 von der Achse 57 abgezogen werden. Die Achse samt den Rädern 55, 56 bleibt auf dem Boden liegen.

Vor Beginn der Arbeit werden die Deichsel 2 und die Halterung 54 für das Transporträderpaar 3 eingeklappt. Beim Einklappen der Deichsel 2 wird zunächst der Deichsel-Unterteil 22 um den Bolzen 39-in die gestrichelte Stellung verschwenkt (siehe Fig. 3). Diese Stellung wird mittels des Arretierungsbolzens 42 fixiert. Der Deichsel-Unterteil 22 ist nun (in der Draufsicht gesehen) etwa auf den Deichsel-Oberteil 20 ausgerichtet. Nun werden Deichsel-Unterteil 22 und Deichsel-Zwischenteil 21 gemeinsam in die Lage gebracht, die in Fig. 2 gestrichelt dargestellt ist. Diese Lage wird dadurch fixiert, daß der gleiche Arretierungsbolzen, der vorher durch das Loch 35 in das Vierkantrohr 31 hindurchgesteckt war, nun durch das Loch 34 im Lappen 33 hindurchgesteckt wird. Die Deichsel liegt damit im wesentlichen oberhalb des Gestells 1 und kann so nicht mit der Drillmaschine D kollidieren. Bei einer Einklappung, wie sie im Anspruch 10 und als Alternative im Anspruch 11 angegeben ist, würde der Deichsel-Unterteil 22 in Fig. 3 gesehen gegenüber der mit ausgezogenen Linien gezeichneten Stellung entgegen zum Uhrzeigersinn um 45° verschwenkt, wobei das Bauteil 37 eine etwas andere Form haben müßte. Nach dem Hochschwenken des Deichsel-Zwischenteiles 21 liegt dann der Deichsel-Unterteil neben der Anordnung aus den Geräteteilen K und D.

Die Halterung 54 wird dadurch näher an das Gestell 1 herangerückt, daß das Vierkantrohr 66 samt dem daran befindlichen Vierkantrohr 71 in die in Fig. 5 strichpunktiert gezeichnete Lage gebracht wird. Diese wird wiederum mittels des gleichen Arretierungsbolzens 68 fixiert, der zuvor die Arbeitsstellung fixiert hatte, in der der Arretierungsbolzen durch ein Loch 87 am Ende des Vierkantrohres 66 hindurchgesteckt war. Durch das Einkalppen von Deichsel 2 und Halterung 54 wird die Breite des Gerätes in der Arbeitsstellung vermindert, so daß mit dem Gerät auch bis nahe an einen Zaun oder dergleichen heran gearbeitet werden kann.

Beim Übergang von der Arbeitsstellung in die Transportstellung wird in umgekehrter Reihenfolge vorgegangen. Hierbei wird nach Ausklappen der Halterung 54 und der Deichsel 2 das Gerät auf die Achse 57 abgelassen. Dieses Ablassen wird dadurch erleichtert, daß die Gabeln 72, 73 nach unten erweitert sind und dadurch, daß die konischen Scheiben 77, 78 als Führungsflächen dienen. Es ist also weder ein genaues Ausrichten der Gabeln auf die Achse notwendig, noch ein genaues seitliches Ausrichten des Vierkantrohres 71. Die genaue Ausrichtung erfolgt vielmehr selbsttätig.

Die Erfindung wurde am Beispiel eines Anbaugerätes erläutert. Hierauf jedoch ist die Erfindung nicht beschränkt; sie ist auch bei einem Anhängegerät anwendbar. Erst im Patentanspruch 12 ist der spezielle Fall des Anbaugerätes angegeben, während die übrigen Ansprüche offenlassen, ob sie sich auf ein Anbaugerät oder auf ein Anhängegerät beziehen.

## Patentansprüche

1. Bodenbearbeitungsmaschine (K) für die Ankupplung an einen Schlepper, mit von einer Schlepper-Zapfwelle aus antreibbaren Werkzeugen (7), insbesondere Bodenfräse oder Kreiselegge, eventuell mit einem angebauten Zusatzgerät (D), und mit einer Langfahreinrichtung für den Transport der Maschine (K), mit der die Maschine (K) in einer gegenüber der Arbeitsstellung um 90° verdrehten Lage an den Schlepper anhängbar ist und die, bezogen auf die Transportstellung, an einem Ende, nämlich dem Deichselende der Maschine (K), eine Deichsel (2) sowie im Bereich des anderen Endes, nämlich dem Radende der Maschine (K),ein nur für Transportzwecke vorgesehenes lösbares Radpaar (3) aufweist, dadurch gekennzeichnet, daß die Länge der Maschine (K) samt eventuellem Zusatzgerät (D), wobei dieses eingezogen sein kann, in Arbeitsrichtung (F') gemessen, gleich oder nur wenig kleiner ist als die höchstzulässige Transportbreite, daß das Radpaar (3) hinter dem Radende der Maschine (K) angeordnet ist, und daß eine Halterung (54) für das Radpaar derart in eine Ruhestellung nach oben klappbar oder schiebbar ist, daß die Breite der Maschine (K) in der Arbeitsstellung verringert wird.

2. Bodenbearbeitungsmaschine nach Anspruch 1, dadurch gekennzeichnet, daß die Räder (55, 56) des Radpaares (3) an einer vorzugsweise geraden Achse (57) gelagert sind, die von einer Halterung (54) für das Radpaar (3) lösbar ist.

3. Bodenbearbeitungsmaschine nach Anspruch 2, dadurch gekennzeichnet, daß an der Halterung (54) Schnellfangtaschen angeordnet sind, vorzugsweise nach unten offene Gabeln (72, 73), die die Achse (57) umgreifen und von unterhalb der Achse (57) verlaufenden Arretierungsbolzen (76) durchgriffen sind.

4. Bodenbearbeitungsmaschine nach Anspruch 3, dadurch gekennzeichnet, daß die Gabeln (72, 73) nach unten erweitert sind.

5. Bodenbearbeitungsmaschine nach einem der Ansprüche 2 und 3, dadurch gekennzeichnet, daß an der Achse (57) Führungsscheiben (77, 78) angeordnet sind, die sich von außen nach innen verjüngen, vorzugsweise konisch und deren lichter Abstand nur wenig größer ist als die Breite der Halterung (54).

6. Bodenbearbeitungsmaschine nach einem der vorhergehenden Ansprüche, dadurch gekennzeichnet, daß die Räder (55, 56) des Radpaares (3) relativ zum tragenden Gestell (1) der Maschine (K) derart asymmetrisch angeordnet sind, daß der Schwerpunkt einer Gerätekombination aus der Bodenbearbeitungsmaschine (K) und einer daran angebauten Anbaumaschine, insbesondere einer Drillmaschine (D), innerhalb der Stützfläche liegt, die definiert ist durch ein Dreieck, dessen Eckpunkte der Deichselabstützpunkt (81) und die Rad-Abstützpunkte (79, 80) sind.

7. Bodenbearbeitungsmaschine nach Anspruch 6, dadurch gekennzeichnet, daß die Anbaumaschine (D) relativ zur Bodenbearbeitungsmaschine (K) derart verschiebbar ist, z.B. durch Hochschwenken einer Viergelenkkupplung, daß der Abstand zur Bodenbearbeitungsmaschine (K) für Transportzwecke verkleinert werden kann.

8. Bodenbearbeitungsmaschine nach einem der vorhergehenden Ansprüche, dadurch gekennzeichnet, daß die Deichsel (2) hochklappbar ist und in der hochgeklappten Stellung über dem tragenden Gestell (1) der Maschine (K) liegt.

9. Bodenbearbeitungsmaschine nach einem der Ansprüche 1 bis 7, dadurch gekennzeichnet, daß die Deichsel hochklappbar ist und in der hochgeklappten Stellung neben dem tragenden Gestell liegt.

10. Bodenbearbeitungsmaschine nach einem der Ansprüche 8 und 9, dadurch gekennzeichnet, daß die Deichsel (2) einen unteren Endteil (22) aufweist, der aus der Transportstellung, in der der Anhängepunkt (81) gegenüber dem tragenden Gestell (1) seitlich verlagert ist, vorzugsweise derart, daß der Anhängepunkt (81) in Fahrtrichtung gesehen etwa in der Mitte zwischen den Rädern (55, 56) des gemäß Anspruch 6 asymmetrisch angeordneten Radpaares (3) liegt, um eine vertikale Achse (39) in eine Ruhestellung schwenkbar ist, in der der untere Endteil (22) in der Draufsicht gesehen auf einen Oberteil (20) ausgerichtet ist bzw. in der der untere Endteil in der Draufsicht gesehen rechtwinklig zum Oberteil ausgerichtet ist und dabei bezüglich der Arbeitsrichtung vorzugsweise nach hinten weist, so daß nach Hochklappen eines Deichsel-Zwischenteiles (21) die Deichsel im wesentlichen oberhalb des tragenden Gestelles (1) bzw. seitlich davon liegt.

11. Bodenbearbeitungsmaschine nach einem der vorhergehenden Ansprüche, dadurch gekennzeichnet, daß an der Deichsel (2) ein vorzugsweise höhenverstellbares Standbein (46) angeordnet ist.

12. Bodenbearbeitungsmaschine nach Anspruch 11, dadurch gekennzeichnet, daß das Standbein (46) in einer mit der Deichsel verbundenen Hülse (45) verschiebbar und mittels Arretierungsbolzen (48, 49) in verschiedenen Höhenlagen relativ zur Hülse (45) feststellbar ist.

13. Bodenbearbeitungsmaschine nach einem der vorhergehenden Ansprüche, dadurch gekennzeichnet, daß sie Anlenkungsstellen (4, 5) für die Ankupplung an ein Schlepper-Dreipunktgestänge aufweist, mit denen die Maschine (K) in der Arbeitsstellung an den Schlepper anbaubar ist.

14. Bodenbearbeitungsmaschine nach einem der vorhergehenden Ansprüche, dadurch gekennzeichnet, daß die Deichsel (2) und die Halterung (54) für das Radpaar (3) gleiche Bauteile aufweisen, nämlich auf dem Gestell befestigte horizontale Vierkantrohre (23, 58), die parallel zum Gestell (1) verlaufen, an deren äußerem Ende angeordnete, nach unten gerichtete Gabeln (29, 30, 64/65) und an den Gabeln schwenkbar gelagerte einklappbare Teile (31, 66).

**Claims**

1. A soil working machine (K) to be coupled with a tractor, having implements (7). which may be driven by a tractor power take-off shaft, more particularly a rotary hoe or a rotary harrow, possibly having an attached auxiliary implement (D), and a transportation device for transporting the machine (K), by means of which the machine (K) can be coupled with the tractor in a position rotated through 90° relative to the operating position, and which, in respect of the transportation position, comprises at one end, namely the towbar end of the machine (K), a towbar (2), and in the region of the other end, namely the wheel end of the machine (K), a detachable pair of wheels (3), which is provided solely for the purpose of transportation, characterised in that, measured in the direction of operation (F'), the length of the machine (K) including a possible auxiliary implement (D), which may be retracted, is equal to or only slightly less than the maximum permissible transportation width, the pair of wheels (3) is arranged behind the wheel end of the machine (K), and a mounting (54) for the pair of wheels may retract or slide upwards into an inoperative position, such that the width of the machine (K) in the operating position is reduced.

2. A soil working machine according to claim 1, characterised in that the wheels (55, 56) of the pair of wheels (3) are mounted on a preferably straight axle (57), which can be detached from a mounting (54) for the pair of wheels (3).

3. A soil working machine according to claim 2, characterised in that quick-gripping pockets are arranged on the mounting (54), preferably forks (72, 73), which are open towards the bottom, which surround the axle (57) and which are penetratsd by stop bolts (76), which extend beneath the axle (57).

4. A soil working machine according to claim 3, characterised in that the forks (72, 73) become wider towards the bottom.

5. A soil working machine according to any one of claims 2 or 3, characterised in that guide discs (77, 78) are arranged on the axle (57), which become narrower from the outside towards the inside, preferably in the shape of a cone, and the clearance of which is only slightly greater than the width of the mounting (54).

6. A soil working machine according to any one of the preceding claims, characterised in that the wheels (55, 56) of the pair of wheels (3) are arranged asymmetrically with respect to the supporting frame (1) of the machine (K), such that the centre of gravity of a combination of implements comprising the soil working machine (K) and an attachment machine attached thereto, more particularly a drilling machine (D), lies within the supporting area, which is defined by a triangle, the corners of which are the towbar support point (81) and the wheel support points (79, 80).

7. A soil working machine according to claim 6, characterised in that the attachment machine (D) may be displaced relative to the soil working machine (K), such that the distance from the soil working machine (K) can be reduced for transportation purposes, e.g. by the upward pivoting of a four-bar coupling.

8. A soil working machine according to any one of the preceding claims, characterised in that the towbar (2) can be retracted upwards and in the upwardly retracted position lies above the supporting frame (1) of the machine (K).

9. A soil working machine according to any one of claims 1 to 7, characterised in that the towbar can be retracted upwards and in the upwardly retracted position lies adjacent to the supporting frame.

10. A soil working machine according to any one of claims 8 and 9, characterised in that the towbar (2) comprises a lower end portion (22), which can be pivoted about a vertical axis (39) out of the transportation position, in which the attachment point (81) is laterally offset relative to the supporting frame (1), preferably such that, viewed in the direction of travel, the attachment point (81) lies approximately centrally between the wheels (55, 56) of the pair of wheels (3) arranged asymmetrically in accordance with claim 6, into an inoperative position, in which the lower end portion (22) is aligned with an upper portion (20) when viewed from above, or in which the lower end portion (22) is perpendicularly aligned with the upper portion and thus preferably points backwards with respect to the direction of operation, such that the towbar lies essentially above the supporting frame (1) or to the side thereof, after an intermediate towbar portion (21) has been folded upwards.

11. A soil working machine according to any one of the preceding claims, characterised in that a preferably height-adjustable support leg (46) is arranged on the towbar (2).

12. A soil working machine according to claim 11, characterised in that the support leg (46) can be displaced within a sleeve (45), which is connected to the towbar, and secured in various vertical positions relative to the sleeve (45) by means of stop bolts (48, 49)

13. A soil working machine according to any one of the preceding claims, characterised in that it comprises coupling points (4, 5) for coupling to a three-point linkage of a tractor, by means of which coupling points the machine (K) can be attached to the tractor.

14. A soil working machine according to any one of the preceding claims, characterised in that the towbar (2) and the mounting (54) for the pair of wheels (3) comprise like component parts, namely horizontal square tubes (23, 58) secured to the frame, which extend parallel to the frame (1), downwardly directed forks (29, 30, 64/65) arranged at the outer ends of the towbar (2) and the mounting (54), and parts (31, 66) which can be retracted and which are pivotably mounted on the forks.

**Revendications**

1. Machine (K) pour le travail du sol, capable d'être accouplée à un tracteur, comprenant des outils (7) pouvant être entraînés par la prise de force d'un tracteur, en particulier du type brise-mottes ou herse rotative, éventuellement avec un appareil additionnel porté (D) et comprenant un dispositif de déplacement longitudinal pour le transport de la machine (K), au moyen duquel la machine (K) peut être accrochée au tracteur dans une position tournée à 90° par rapport à la position de travail, et lequel comporte, relativement à la position de transport, à une extrémité - à savoir l'extrémité du timon de la machine (K) - un timon (2), ainsi que dans la région de l'autre extrémité - à savoir l'extrémité des roues de la machine (K), une paire de roues (3) détachables prévue seulement pour le transport, caractérisée en ce que la longueur de la machine (K), y compris l'appareil additionnel éventuel (D) - celui-ci pouvant être rétracté - mesurée dans la direction de travail (F'), est égale ou seulement de peu inférieure à la plus grande largeur de transport admissible, en ce que la paire de roues (3) est disposée derrière l'extrémité des roues de la machine (K), et en ce qu'une attache (54) de la paire de roues peut être amenée par relèvement ou par coulissement vers le haut dans une position de repos, de façon que la largeur de la machine (K) soit diminuée dans la position de travail.

2. Machine de travail du sol selon la revendication 1, caractérisée en ce que les roues (55, 56) de la paire de roues (3) reposent sur un axe (57) de préférence droit, qui peut être détaché d'une attache (54) de soutien de la paire de roues (3).

3. Machine de travail du sol selon la revendication 2, caractérisée en ce que sur l'attache (54) des poches de prise rapide sont disposées, à savoir de préférence des fourches (72, 73) ouvertes vers le bas, qui enserrent l'axe (57) et qui sont traversées par des chevilles de blocage (76) passant sous l'axe (57).

4. Machine de travail du sol selon la revendication 3, caractérisée en ce que les fourches (72, 73) sont prolongées vers le bas.

5. Machine de travail du sol selon l'une des revendications 2 et 3, caractérisée en ce que des disques de guidage (77, 78) sont disposés sur l'axe (57), ces disques allant en s'amincissant de l'extérieur vers l'intérieur, en ayant de préférence une forme conique, leur écartement libre n'étant que de peu supérieur à la largeur de l'attache (54).

6. Machine de travail du sol selon l'une des revendications précédentes, caractérisée en ce que les roues (55, 56) de la paire de roues (3) sont disposées, relativement au châssis porteur (1) de la machine (K), d'une manière asymétrique de façon que le centre de gravité d'une combinaison d'appareils constituée par la machine de travail du sol (K) et une machine portée par elle, en particulier un semoir (D), se trouve à l'intérieur de la surface de sustentation définie par un triangle ayant pour sommets le point d'appui (81) du timon et les points d'appui (79, 80) de roues.

7. Machine de travail du sol selon la revendication 6, caractérisée en ce que, par rapport à la machine (K) de travail du sol, la machine portée (D) est coulissable, par exemple par pivotement vers le haut d'un accouplement à quadrilatère articulé, de façon que pour le transport, l'écartement par rapport à la machine de travail du sol (K) puisse être réduit.

8. Machine de travail du sol selon l'une des revendications précédentes, caractérisée en ce que le timon (2) peut être relevé et se trouver, dans la position relevée, au-dessus du châssis porteur (1) de la machine.

9. Machine de travail du sol selon l'une des revendications 1 à 7, caractérisée en ce que le timon est relevable et se place, dans la position relevée, à côté du châssis porteur.

10. Machine de travail du sol selon l'une des revendications 8 et 9, caractérisée en ce que le timon (2) comporte une partie d'extrémité (22) qui est capable de pivoter à partir de la position de transport - dans laquelle le point d'accrochage (81) est décalé latéralement par rapport au châssis porteur (1), de préférence de façon que le point d'accrochage (81), vu dans la direction du trajet, se trouve sensiblement au milieu entre les roues (55, 56) de la paire de roues (3) disposée asymétriquement conformément à la revendication 6 - autour d'un axe vertical (39) pour venir dans une position de repos, dans laquelle la partie d'extrémité (22), vue du dessus, est alignée sur une partie de dessus (20) ou dans laquelle la partie d'extrémité inférieure, vue du dessus, est dirigée perpendiculairement à la partie supérieure et pointe de préférence vers l'arrière relativement à la direction du travail, de sorte qu'après relèvement d'une partie intermédiaire (21) du timon, le timon se place essentiellement au-dessus du châssis porteur (1) ou latéralement par rapport à lui.

11. Machine de travail du sol selon l'une des revendications précédentes, caractérisée en ce qu'une jambe d'appui (46), de préférence de hauteur réglable, est disposée sur le timon (2).

12. Machine de travail du sol selon la revendication 11, caractérisée en ce que la jambe d'appui (46) peut coulisser dans un manchon (45) lié au timon et peut être fixée à différents niveaux de hauteur par rapport au manchon (45) au moyen de chevilles de blocage (48, 49).

13. Machine de travail du sol selon l'une des revendications précédentes, caractérisée en ce qu'elle comporte des emplacements d'articulation (4, 5) pour l'accouplement à une tringlerie à trois points d'un tracteur, au moyen de laquelle la machine (K) peut être montée, dans la position de travail, pour être portée par le tracteur.

14. Machine de travail du sol selon l'une des revendications précédentes, caractérisée en ce que le timon (2) et l'attache (54) de la paire de roues (3) comportent des mêmes pièces, à savoir des tubes carrés horizontaux (23, 58) fixés au châssis, qui sont dirigés parallèlement au châssis (1) où se trouvent, a son extrémité extérieure, des fourches (29, 30, 64/65) dirigées vers le bas et des parties rétractées (31, 66) supportées avec possibilité de pivotement sur les fourches.

## _Fig.7_

## _Fig.1_

1

Fig.4

Fig.2

Fig.3

## Fig.5

## Fig.6